# EUROPÄISCHE PATENTSCHRIFT

(11) **EP 1 308 006 B1**
(45) Veröffentlichungstag und Bekanntmachung des Hinweises auf die Patenterteilung: **22.01.2014**
(21) Anmeldenummer: 01964865.8
(22) Anmeldetag: 27.07.2001
(51) Int. Cl.: H04L 12/54, H04L 29/06, H04L 12/70, H04M 7/00

(54) **VERFAHREN ZUM AUFBAU EINER VERBINDUNG MIT VORGEGEBENER DIENSTGÜTE ZWISCHEN KOMMUNIKATIONSNETZEN MIT RESOURCENMANAGERN**
METHOD FOR ESTABLISHING A CONNECTION WITH A PREDETERMINED SERVICE QUALITY BETWEEN COMMUNICATIONS NETWORKS WITH RESOURCE MANAGERS
PROCEDE PERMETTANT D'ETABLIR UNE COMMUNICATION D'UNE QUALITE DE SERVICE DONNEE ENTRE DES RESEAUX DE COMMUNICATION ET DES GESTIONNAIRES DE RESSOURCES

(30) Priorität: 09.08.2000 DE 10038878
(43) Veröffentlichungstag der Anmeldung: 07.05.2003
(73) Patentinhaber: Unify GmbH & Co. KG, 81379 München (DE)
(72) Erfinder: MÜLLER, Harald, 82205 Gilching (DE); KLAGHOFER, Karl, 81373 München (DE); HIERHOLZER, Peter, 82407 Wielenbach (DE); PREHOFER, Christian, 81477 München (DE)
(74) Vertreter: Fritzsche, Thomas
(86) Internationale Anmeldenummer: PCT/DE2001/002857
(87) Internationale Veröffentlichungsnummer: WO 2002/013456

(56) Entgegenhaltungen:
- WO-A-99/27686
- XIAO X: "Internet QOS: A Big Picture" IEEE NETWORK, IEEE INC. NEW YORK, US, Bd. 13, Nr. 2, März 1999 (1999-03), Seiten 8-18, XP002115238 ISSN: 0890-8044
- ROB NEILSON, JEFF WHEELER, FRANCIS REICHMEYER, SUSAN HARES: "A Discussion of Bandwidth Broker Requirements for Internet2 Qbone Deployment Version 0.7" IEEE INTERNET DRAFT, August 1999 (1999-08), Seiten 1-30, XP002186975 in der Anmeldung erwähnt
- DALGIC I ET AL: "COMPARISON OF H.323 AND SIP FOR IP TELEPHONY SIGNALING" PROCEEDINGS OF THE SPIE, SPIE, BELLINGHAM, VA, US, Bd. 3845, 1999, Seiten 106-122, XP000949839

## Beschreibung

In vielen weit verbreiteten, paketorientierten Kommunikationsnetzen, wie z.B. im Internet, wird für Verbindungen zwischen Endgeräten dieser Kommunikationsnetze keine Dienstgüte garantiert, wenn keine zusätzlichen Vorkehrungen getroffen werden. Die Dienstgüte einer Verbindung wird häufig auch als Quality of Service (QoS) bezeichnet und kann unterschiedliche Übertragungs- und Verbindungsparameter, wie z.B. die Übertragungsbandbreite, die Übertragungsgeschwindigkeit, die zulässige Fehlerrate und/oder die Übertragungsdauer umfassen.

In zeitgemäßen Kommunikationssystemen, die häufig auf solchen paketorientierten Kommunikationsnetzen basieren, sind zur Sicherung einer vorgegebenen Dienstgüte sogenannte Resourcenmanager vorgesehen. Diese sind jeweils einem Kommunikationsnetz oder einem Teilnetz zugeordnet und verwalten dessen jeweilige Übertragungsresourcen. Bei einem Resourcenmanager können für aufzubauende Verbindungen jeweils vorgebbare Übertragungsresourcen verbindungsspezifisch reserviert werden. Nach einer erfolgreichen Reservierung von Übertragungsresourcen überwacht der Resourcenmanager dann die permanente Verfügbarkeit der reservierten Übertragungsresourcen für die jeweilige Verbindung.

In vielen Fällen befinden sich Anfangs- und Endpunkt einer Verbindung nicht im selben Kommunikationsnetz oder Teilnetz, so dass die Verbindung über mehrere Kommunikationsnetze zu führen ist. Um für eine derartige Verbindung vorgegebene Übertragungsresourcen zu reservieren, sind diese in jedem einzelnen an der Verbindung beteiligten Kommunikationsnetz oder Teilnetz, separat zu reservieren.

Gemäß dem bekannten Stand der Technik ist zu diesem Zweck eine Reservierungsanforderung zum Resourcenmanager des auf dem Leitweg zum Verbindungsziel nächstliegenden Kommunikationsnetzes zu senden. Dieser Resourcenmanager versucht eine entsprechende Resourcenreservierung in seinem Kommunikationsnetz vorzunehmen und sendet die Reservierungsanforderung im Erfolgsfall weiter zu demjenigen Resourcenmanager, der für das nächste auf dem Leitweg der Verbindung befindliche Kommunikationsnetz zuständig ist. Dieser Resourcenmanager verfährt ebenso und die Reservierungsanforderung wird so lange weitergegeben, bis entweder eine entsprechende Resourcenreservierung in einem Kommunikationsnetz fehlschlägt oder bis die Reservierungsanforderung den für das Zielkommunikationsnetz zuständigen Resourcenmanager erreicht. Dieser übermittelt bei erfolgreicher Resourcenreservierung eine Bestätigungsmeldung über alle beteiligten Resourcenmanager bis zum Initiator der Verbindung im ersten Kommunikationsnetz zurück. Der Initiator der Verbindung veranlaßt daraufhin, einen über die einzelnen Kommunikationsnetze verlaufenden Aufbau der Verbindung. Ein derartiges Verfahren ist beispielsweise in dem Internet-Draft "A Discussion of Bandwidth Broker Requirements for Internet2 Qbone Deployment", Version 7, R. Neilson, J. Wheeler, F. Reichmeyer, S. Hares (Editors) vom August 1999, http://www.merit.edu/working.groups/i2-qbone-bb/doc/BB Req7.pdf, 10. 7. 2000, insbesondere auf den Seiten 12 und 13 beschrieben.

Bei diesem bekannten Verfahren verzögert sich ein über mehrere Kommunikationsnetze führender Verbindungsaufbau aufgrund der aufwendigen Signalisierung allerdings beträchtlich. Dies kann sich insbesondere bei Verbindungen über das aus einer Vielzahl von einzelnen Kommunikationsnetzen bestehende Internet sehr nachteilig auswirken.

Aus der Druckschrift "Internet QoS: A Big Picture" von Xipeng Xiao und Lionel M. Ni aus Band 13, Nr. 2 von IEEE Network der IEEE Inc., New York vom März 1999 ist ein netwerkübergreifender Aufbau einer Verbindung mit vorgegebener Dienstgüte bekannt. Dabei wird im Rahmen des sog. "Differentiated-Services"-Modells eine Ressourcenanforderung mittels des sog. RSVP-Protokolls vom Ursprungsnetz über eventuelle Transitnetze zum Zielnetz übertragen. Die Ressourcenanforderung wird in jedem beteiligten Ressourcenmanager auf Zulässigkeit geprüft. Falls die Ressourcenanforderung schließlich auch vom Ressourcenmanager des Zielnetzes als zulässig erachtet wird, sendet dieser eine Reservierungsmeldung zurück in Ursprungsnetz, die jeden der beteiligten Ressourcenmanager dazu veranlasst, die Reservierung vorzunehmen. Auch bei diesem Verfahren beginnt die eigentliche Reservierung erst mit der Rückübermittlung der Reservierungsmeldung.

Es ist Aufgabe der vorliegenden Erfindung ein Verfahren anzugeben, das einen schnellen Aufbau von Verbindungen mit garantierter Dienstgüte auch über mehrere Kommunikationsnetze erlaubt.

Gelöst wird diese Aufgabe durch ein Verfahren mit den Merkmalen des Patentanspruchs 1.

Vorteilhafte Ausführungen und Weiterbildungen der Erfindung sind in den abhängigen Ansprüchen angegeben.

Das erfindungsgemäße Verfahren erlaubt einen gegenüber dem Stand der Technik wesentlichen schnelleren Aufbau einer über mehrere Kommunikationsnetze führenden Verbindung mit garantierter Dienstgüte. Die Dienstgüte kann dabei ganz unterschiedliche Übertragungsresourcen, wie z.B. Übertragungsbandbreite, Übertragungsgeschwindigkeit, zulässige Fehlerrate Übertragungsverzögerung und/oder beliebige andere sog. Quality-of-Service-Parameter, gegebenenfalls prioritätsklassenspezifisch betreffen.

Ein schnellerer Verbindungsaufbau wird unter anderem dadurch bedingt, dass eine Reservierungsinformation über den Erfolg der Resourcenreservierungen in den einzelnen Kommunikationsnetzen von einem Zielnetz-Resourcenmanager direkt zu einer Verbindungssteuerung des Zielnetzes übermittelt wird. Eine zeitraubende Rückübermittlung dieser Reservierungsinformation vom Zielnetz-Resourcenmanager über den Ursprungsnetz-Resourcenmanager zu einer Verbindungssteuerung des Ursprungsnetzes und eine erst daran anschließende Verbindungsaufbausignalisierung durch die Verbindungssteuerung des Ursprungsnetzes - wie beim bekannten Stand der Technik - entfällt damit. Beim erfindungsgemäßen Verfahren laufen die Resourcenreservierung mittels der Resourcenmanager der einzelnen Kommunikationsnetze und die Verbindungsaufbausignalisierung mittels der Verbindungssteuerungen des Ursprungsnetzes und des Zielnetzes gewissermaßen parallel ab.

Als Verbindungssteuerung kann im Ursprungs- und/oder im Zielnetz jeweils ein sogenannter Gatekeeper zur logischen Verbindungssteuerung, Verbindungskontrolle, Verbindungsüberwachung und/oder zum logischen Verbindungsauf- und -abbau vorgesehen sein.

Die Verbindungssteuerung des Zielnetzes wird durch die Übermittlung der Verbindungsaufbaumeldung dazu veranlaßt, die Reservierungsinformation über den Erfolg der Resourcenreservierungen vom Zielnetz-Resourcenmanager abzufragen.

Sofern diese Reservierungsinformation bei einer ersten Abfrage noch nicht vorliegt, kann die Abfrage gegebenenfalls wiederholt werden. Dabei kann eine maximale Anzahl von Wiederholungen und/oder eine maximale Zeitspanne vorgegeben sein, nach deren Überschreiten der weitere Verbindungsaufbau abgebrochen wird. Sobald die Reservierungsinformation im Zielnetz-Resourcenmanager vorliegt, wird die Reservierungsinformation bis zur Abfrage durch die Verbindungssteuerung des Zielnetzes vom Zielnetz-Resourcenmananger gespeichert. Zwischen dem Ursprungsnetz und dem Zielnetz können sich ein oder mehrere weitere, jeweils eigene Resourcenmanager aufweisende Kommunikationsnetze befinden, über die die aufzubauende Verbindung zu führen ist. In diesem Fall ist die Reservierungsanforderung vom Ursprungsnetz-Resourcenmanager über alle weiteren, für die zwischenliegenden Kommunikationsnetze zuständigen Resourcenmanager zum Zielnetz-Resourcenmanager zu übermitteln. Die Route, auf der die Reservierungsanforderung dabei übermittelt wird, kann vorzugsweise durch die beteiligten Resourcenmanager oder auch allein durch den Ursprungsnetz-Resourcenmanager anhand einer übermittelten, ein Verbindungsziel identifizierenden Adressinformation festgelegt werden. Zu diesem Zweck kann für den Ursprungsnetz-Resourcenmanager bzw. für die weiteren Resourcenmanager ein Zugriff auf Routing-Tabellen vorgesehen sein. Die das Verbindungsziel identifizierende Adressinformation kann vorzugsweise von der Verbindungssteuerung des Ursprungsnetzes zum Ursprungsnetz-Resourcenmanager im Rahmen der Reservierungsanforderung übermittelt werden.

Weiterhin kann Reservierungsinformation über den Erfolg einer Resourcenreservierung durch den Zielnetz-Resourcenmanager außer zur Verbindungssteuerung des Zielnetzes auch noch zusätzlich zurück zum Ursprungsnetz-Resourcenmanager übermittelt werden. Auf diese Weise wird der Ursprungsnetz-Resourcenmanager und gegebenenfalls auch alle zwischenliegenden Resourcenmanager über eine erfolgreiche Resourcenreservierung entlang des gesamten Vebindungswegs informiert. Diese Information kann von den Resourcenmanagern zur Optimierung ihrer Resourcenverwaltung verwertet werden.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit drei, jeweils einen Resourcenmanager aufweisenden Teilnetzen, über die eine Verbindung mit garantierter Dienstgüte aufgebaut wird und
Fig 2 ein Ablaufdiagramm zur Veranschaulichung des Signalisierungsverkehrs beim Aufbau der Verbindung.

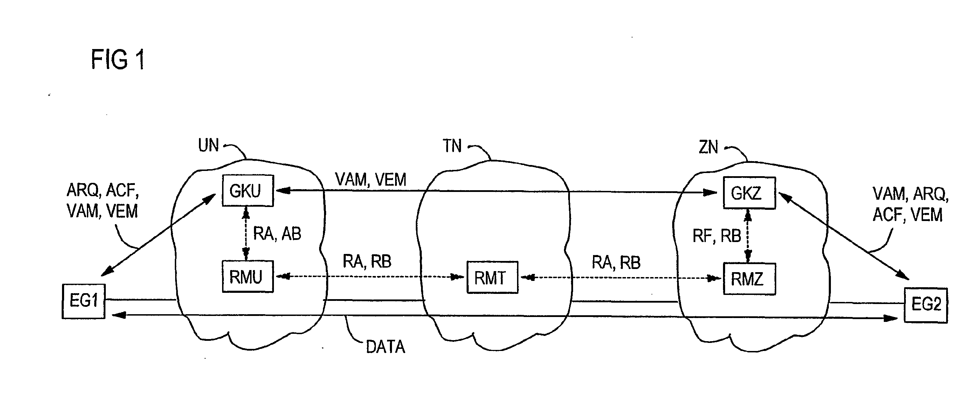

In Fig 1 ist ein Kommunikationssystem mit drei, vorzugsweise internetprotokollbasierten Kommunikationsteilnetzen UN, TN und ZN schematisch dargestellt. Die einzelnen Kommunikationsteilnetze werden im Folgenden als Ursprungsnetz UN, Transitnetz TN bzw. Zielnetz ZN bezeichnet. Das Ursprungsnetz UN ist mit dem Transitnetz TN und dieses wiederum mit dem Zielnetz ZN gekoppelt. Zur Verwaltung von Übertragungsresourcen ist im Ursprungsnetz UN ein Ursprungsnetz-Resourcenmanager RMU, im Transitnetz TN ein Transitnetz-Resourcenmanager RMT und im Zielnetz ZN ein Zielnetz-Resourcenmanager RMZ angeordnet. Die Resourcenmanager RMU, RMT und RMZ sind in ihrem jeweiligen Kommunikationsteilnetz UN, TN bzw. ZN für die Reservierung von Übertragungsresourcen für aufzubauende Verbindungen sowie für die Sicherstellung der Dienstgüte von aufgebauten Verbindungen zuständig. Die Übertragungsresourcen und die Dienstgüte können dabei ganz unterschiedliche Übertragungsparameter betreffen, wie z.B. eine maximale oder mittlere Übertragungsbandbreite, Übertragungsverzögerung und/oder Übertragungsfehlerrate. Für alle Verbindungen, die eine Dienstgütegarantie in einem oder mehreren Kommunikationsteilnetzen UN, TN, ZN erfordern, müssen die entsprechenden Übertragungsresourcen beim jeweils zuständigen Resourcenmanager UN, TN bzw. ZN angefordert und nach Abbau der Verbindung wieder freigegeben werden.

Weiterhin ist an das Ursprungsnetz UN ein Endgerät EG1 und an das Zielnetz ZN ein Endgerät EG2 angekoppelt. Die Endgeräte EG1 und EG2 können dabei als beliebige Kommunikationsendgeräte, z.B. zur Sprach-, Video- und/oder Datenkommunikation oder auch als Personalcomputer ausgebildet sein. Dem Ursprungsnetz UN ist ferner ein sogenannter Gatekeeper GKU und dem Zielnetz ZN ein Gatekeeper GKZ zugeordnet. Die Gatekeeper GKU und GKZ sind im jeweils zugeordneten Teilnetz UN bzw. ZN für eine logische Steuerung, d.h. für Auf- und Abbau sowie Überwachung von Verbindungen zuständig. Im vorliegenden Ausführungsbeispiel genügen die Gatekeeper GKU und GKZ dem ITU-T-Standard H.323. Nach einer weiteren Ausführungsform kann vorgesehen sein, dass die Gatekeeper GKU und GKZ das sogenannte SIP-Protokoll (SIP: Session Initiation Protocol) gemäß IETF-Standard unterstützen.

Im vorliegenden Ausführungsbeispiel wird ein erfindungsgemäßer Aufbau einer Verbindung, z.B. zur Sprachübertragung (VoIP: Voice over Internet Protocol), mit garantierter Dienstgüte vom Endgerät EG1 zum Endgerät EG2 betrachtet. Im Rahmen dieses Verbindungsaufbaus wird eine Verbindungsaufbausignalisierung über die Gatekeeper GKU und GKZ sowie parallel dazu eine Resourcenreservierung über die Resourcenmanager RMU, RMT und RMZ durchgeführt.

Zur Verbindungsaufbausignalisierung werden logische Signalisierungskanäle zwischen dem Endgerät EG1 und dem Gatekeeper GKU, zwischen dem Gatekeeper GKU und dem Gatekeeper GKZ und zwischen dem Gatekeeper GKZ und dem Endgerät EG2 eingerichtet. Die logischen Signalisierungskanäle zur Verbindungsaufbausignalisierung sind in Fig 1 mittels durchgezogener Doppelpfeile veranschaulicht. Die Verbindungsaufbausignalisierung erfolgt vorzugsweise gemäß der ITU-T-Empfehlung H.323v2. Diese Art der Verbindungsaufbausignalisierung wird häufig auch als "fast connect" bezeichnet.

Zur Resourcenreservierung werden weiterhin logische Signalisierungskanäle zwischen dem Gatekeeper GKU und dem Ursprungsnetz-Resourcenmanager RMU, zwischen den Ursprungsnetz-Resourcenmanager RMU und dem Transitnetz-Resourcenmanager RMT, zwischen dem Transitznetz-Resourcenmanager RMT und dem Zielnetz-Resourcenmanager RMZ sowie zwischen dem Zielnetz-Resourcenmanager RMZ und dem Gatekeeper GKZ eingerichtet. Die logischen Signalisierungskanäle zur Resourcenreservierung sind in Fig 1 jeweils durch strichlierte Doppelpfeile angedeutet.

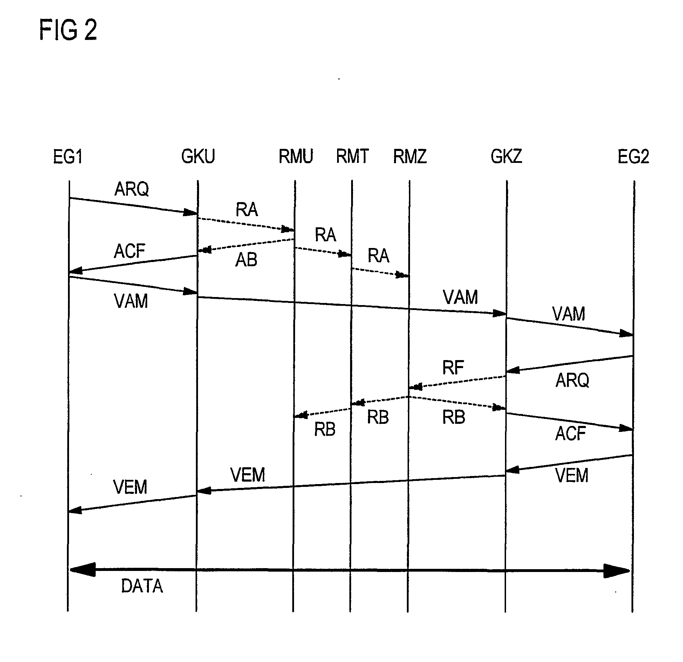

Der Ablauf des Signalisierungsverkehrs zum Verbindungsaufbau und zur Resourcenreservierung wird nachfolgend anhand von Fig 2 näher erläutert. Fig 2 zeigt ein Ablaufdiagramm des Signalisierungsverkehrs zwischen den Endgeräten EG1 und EG2, den Gatekeepern GKU und GKZ sowie den Resourcenmanagern RMU, RMT und RMZ. In Analogie zu Fig 1 sind die im Rahmen der Verbindungsaufbausignalisierung zu übermittelnden Signalisierungsmeldungen mittels durchgezogener Pfeile und die im Rahmen der Resourcenreservierung zu übermittelnden Signalisierungsmeldungen durch strichlierte Pfeile angedeutet. Die Pfeilrichtung gibt dabei jeweils die Übertragungsrichtung an. Einander entsprechende Objekte besitzen in Fig 1 und Fig 2 gleiche Bezugszeichen. Die Zeitachse verläuft in Fig 2 von oben nach unten.

Das Endgerät EG1 initiiert den Verbindungsaufbau durch Übermitteln einer Zugangsanfragemeldung ARQ (Admission Request) zum Gatekeeper GKU. Die Zugangsanfragemeldung ARQ enthält unter anderem eine das Zielendgerät EG2 identifizierende Zieladressinformation, z.B. dessen Rufnummer, sowie eine die erforderliche Dienstgüte der Verbindung angebende Dienstgüteinformation. Der Gatekeeper GKU initiiert daraufhin eine Reservierung von Übertragungsresourcen gemäß der übermittelten Dienstgüteinformation. Zu diesem Zweck übermittelt der Gatekeeper GKU eine entsprechende Reservierungsanforderungsmeldung RA zum Ursprungsnetz-Resourcenmanager RMU. Mit der Reservierungsanforderungsmeldung RA wird unter anderem die das Zielendgerät EG2 identifizierende Zieladressinformation zum Ursprungsnetz-Resourcenmanager RMU übermittelt. Der Ursprungsnetz-Resourcenmanager RMU bestätigt daraufhin dem Gatekeeper GKU den Empfang der Reservierungsanforderungsmeldung RA durch Übermitteln einer Anforderungsbestätigungsmeldung AB. Die Reservierung selbst wird dadurch jedoch nicht bestätigt. Die Reservierung wird vielmehr erst nachfolgend durchgeführt und zwar parallel zum Verbindungsaufbau über die Gatekeeper GKU und GKZ.

Im Rahmen der Reservierung der Übertragungsresourcen wird vom Ursprungsnetz-Resourcenmanager RMU zunächst geprüft, ob die angeforderten Übertragungsresourcen im Ursprungsnetz UN noch verfügbar sind. Sofern dies der Fall ist, werden diese Übertragungsresourcen für die aufzubauende Verbindung reserviert. Weiterhin werden durch den Ursprungsnetz-Resourcenmanager RMU anhand der übermittelten Zieladressinformation dasjenige oder diejenigen Kommunikationsteilnetze, hier TN und ZN, ermittelt, über die die Verbindung zum Zielendgerät, hier EG2, aufzubauen ist. Hierbei wird auch der jeweils zuständige Resourcenmanager, hier RMT und RMZ, ermittelt.

Sofern die Resourcenreservierung im Ursprungsnetz UN erfolgreich ist, wird durch den Ursprungsnetz-Resourcenmanager RMU eine Resourcenanforderungsmeldung RA zum Transitnetz-Resourcenmanager RMT übermittelt. Dieser prüft zunächst, ob die angeforderten Übertragungsresourcen im Transitnetz TN noch verfügbar sind. Sofern dies der Fall ist, werden die angeforderten Übertragungsresourcen reserviert, und es wird eine Reservierungsanforderungsmeldung RA zum Zielnetz-Resourcenmanager RMZ übermittelt. Auch dieser überprüft zunächst die Verfügbarkeit der angeforderten Übertragungsresourcen im Zielnetz ZN und reserviert die Übertragungsresourcen im Erfolgsfall.

Da die Resourcenanforderungsmeldung RA jeweils nur bei erfolgreicher Resourcenreservierung weitergeleitet wird, kann bei Eintreffen der Resourcenanforderungsmeldung RA beim Zielnetz-Resourcenmanager RMZ davon ausgegangen werden, dass die Resourcenreservierung entlang dem gesamten zum Zielnetz ZN führenden Leitweg der aufzubauenden Verbindung erfolgreich war. Eine alternative Möglichkeit, den Zielnetz-Resourcenmanager RMZ über den Erfolg der Resourcenreservierung zu informieren, besteht darin, eine separate Reservierungsinformation zum Zielnetz-Resourcenmanager RMZ zu übermitteln, die den jeweiligen Erfolg einer Resourcenreservierung angibt.

Parallel zur Resourcenreservierung wird der Verbindungsaufbau durch den Gatekeeper GKU fortgesetzt, indem dieser nach Empfang der Anforderungsbestätigungsmeldung AB eine Anfragebestätigungsmeldung ACF (Admission Confirmation) zum Endgerät EG1 überträgt. Dieses sendet daraufhin - noch ohne Bestätigung einer erfolgreichen Resourcenreservierung - eine Verbindungsaufbaumeldung VAM (Setup) zum Gatekeeper GKU, der die Verbindungsaufbaumeldung VAM zum anhand der Zieladressinformation ermittelten Gatekeeper GKZ weiterleitet. Dabei wird auch eine Information vom Gatekeeper GKU zum Gatekeeper GKZ übermittelt, die angibt, dass parallel zur Verbindungsaufbausignalisierung eine Resourcenreservierung stattfindet. Die Verbindungsaufbaumeldung VAM wird vom Gatekeeper GKZ weiter zum Endgerät EG2 übertragen. Infolgedessen übermittelt das Endgerät EG2 eine Zugangsanfragemeldung ARQ zum Gatekeeper GKZ, der daraufhin eine Reservierungsabfragemeldung RF zum Zielnetz-Resourcenmanager RMZ sendet, um sich eine erfolgreiche Resourcenreservierung bestätigen zu lassen. Sofern die Resourcenreservierung im Zielnetz-Resourcenmanager RMZ - und damit auch in den Resourcenmanagern RMU und RMT - erfolgreich war, übermittelt der Zielnetz-Resourcenmanager RMZ eine Reservierungsbestätigungsmeldung RB an den Gatekeeper GKZ sowie an die Resourcenmanager RMU und RMT. Nach Empfang der Reservierungsbestätigungsmeldung RB durch den Gatekeeper GKZ sendet dieser eine Anfragebestätigungsmeldung ACF zum Endgerät EG2, woraufhin dieses die aufzubauende Verbindung durch Verbindungseinleitungsmeldungen VEM einleitet. Die Verbindungseinleitungsmeldungen VEM werden über die Gatekeeper GKZ und GKU bis zum Endgerät EG1 übertragen und bestehen vorzugsweise aus einer sogenannten Call-Proceeding-Meldung, einer sogenannten Alerting-Meldung und einer sogenannten Connect-Meldung. Nach Übermittlung dieser Verbindungseinleitungsmeldungen VEM ist die Verbindung aufgebaut, so dass Nutzdaten DATA zwischen den Endgeräten EG1 und EG2 über die Teilnetze UN, TN und ZN ausgetauscht werden können.

Durch die zusätzliche Übermittlung der Reservierungsbestätigungsmeldung RB an die Resourcenmanager RMU und RMT werden diese darüber informiert, dass die reservierten Resourcen auch tatsächlich in Anspruch genommen werden. Vorzugsweise kann für die Resourcenmanager RMT und RMU für das Eintreffen der Reservierungsbestätigungsmeldung RB eine Zeitspanne vorgegeben sein, bei deren Überschreiten die Reservierung aufgehoben wird.

Falls bei der Abfrage der Resourcenreservierung durch den Gatekeeper GKZ die Reservierung im Zielnetz-Resourcenmanager RMZ noch nicht erfolgt ist, kann die Abfrage gegebenenfalls mehrmals durch Übermittlung weiterer Reservierungsabfragemeldungen RF wiederholt werden. Weiterhin kann eine Zeitspanne vorgegeben sein, in der der Gatekeeper GKZ darauf wartet, dass eine Reservierungsbestätigungsmeldung RB eintrifft. Falls für die aufzubauende Verbindung nach wiederholter Abfrage und/oder Ablauf der vorgegebenen Zeitspanne keine Reservierungsbestätigungsmeldung RB vom Zielnetz-Resourcenmanager RMZ zum Gatekeeper GKZ übermittelt wird, wird von diesem der Verbindungsaufbau beendet.

## Patentansprüche

1. Verfahren zum Aufbau einer Verbindung mit vorgegebener Dienstgüte von einem Ursprungsnetz (UN) mit einem Ursprungsnetz-Ressourcenmanager (RMU) zu einem Zielnetz (ZN) mit einem Zielnetz-Ressourcenmanager (RMZ), bei dem
a) zur Initialisierung der Verbindung durch eine Verbindungssteuerung (GKU) des Ursprungsnetzes (UN) sowohl eine Verbindungsaufbaumeldung (VAM) zu einer Verbindungssteuerung (GKZ) des Zielnetzes (ZN) als auch eine Reservierungsanforderung (RA) zum Ursprungsnetz-Ressourcenmanager (RMU) übermittelt werden,
b) durch den Ursprungsnetz-Ressourcenmanager (RMU) eine Ressourcenreservierung im Ursprungsnetz (UN) gemäß der Reservierungsanforderung (RA) initiiert wird und die Reservierungsanforderung (RA) in Richtung zum Zielnetz-Ressourcenmanager (RMZ) übermittelt wird,
c) durch den Zielnetz-Ressourcenmanager (RMZ) eine Ressourcenreservierung im Zielnetz (ZN) gemäß der empfangenen Reservierungsanforderung (RA) initiiert wird, und
d) die Verbindungssteuerung (GKZ) des Zielnetzes (ZN) durch die Übermittlung der Verbindungsaufbaumeldung (VAM) dazu veranlasst wird, Reservierungsinformation (RB) über den Erfolg der Ressourcenreservierung vom Zielnetz-Ressourcenmanager (RMZ) abzufragen, woraufhin die Reservierungsinformation (RB) zur Verbindungssteuerung (GKZ) des Zielnetzes (ZN) übermittelt wird.

2. Verfahren nach Anspruch 1,
**dadurch gekennzeichnet,**
**daß** der Verbindungsaufbau durch die Verbindungssteuerung (GKZ) des Zielnetzes (ZN) nur dann fortgesetzt wird, falls eine eine erfolgreiche Resourcenreservierung anzeigende Reservierungsinformation (RB) empfangen wird.

3. Verfahren nach einem der vorhergehenden Ansprüche,
**dadurch gekennzeichnet,**
**daß** durch den Ursprungsnetz-Resourcenmanager (RMU) eine Reservierungsinformation über den Erfolg der Resourcenreservierung im Ursprungsnetz (UN) in Richtung zum Zielnetz-Resourcenmanager (RMZ) übermittelt wird.

4. Verfahren nach einem der Ansprüche 1 oder 2,
**dadurch gekennzeichnet,**
**daß** die Reservierungsanforderung (RA) durch den Ursprungsnetz-Resourcenmanager (RMU) nur bei erfolgreicher Resourcenreservierung im Ursprungsnetz (UN) in Richtung zum Zielnetz-Resourcenmanager (RMZ) übermittelt wird.

5. Verfahren nach einem der vorhergehenden Ansprüche,
**dadurch gekennzeichnet,**
**daß** die Reservierungsanforderung (RA) vom Ursprungsnetz-Resourcenmanager (RMZ) über mindestens einen weiteren, für den Verbindungspfad zwischen Ursprungs- (UN) und Zielnetz (ZN) zuständigen Resourcenmanager (RMT) zum Zielnetz-Resourcenmanager (RMZ) übermittelt wird.

6. Verfahren nach einem der vorhergehenden Ansprüche,
**dadurch gekennzeichnet,**
**daß** durch den Ursprungsnetz-Resourcenmanager (RMU) der Zielnetz-Resourcenmanager (RMZ) und/oder mindestens ein weiterer, für den Verbindungspfad zwischen Ursprungs- (UN) und Zielnetz (ZN) zuständiger Resourcenmanager (RMT) anhand einer übermittelten, ein Verbindungsziel (EG2) identifizierenden Adreßinformation ermittelt werden.

7. Verfahren nach einem der vorhergehenden Ansprüche,
**dadurch gekennzeichnet,**
**daß** durch die Verbindungsaufbausteuerung (GKU) des Ursprungsnetzes (UN) zur Verbindungsaufbausteuerung (GKZ) des Zielnetzes (ZN) signalisiert wird, daß eine Resourcenreservierung stattfindet.

8. Verfahren nach einem der vorhergehenden Ansprüche,
**dadurch gekennzeichnet,**
**daß** Reservierungsinformation (RB) über den Erfolg einer Resourcenreservierung vom Zielnetz-Resourcenmanager (RMZ) zum Ursprungsnetz-Resourcenmanager (RMU) übermittelt wird.

9. Verfahren nach einem der vorhergehenden Ansprüche,
**dadurch gekennzeichnet,**
**daß** eine Signalisierung zwischen der Verbindungsaufbausteuerung (GKU) des Ursprungsnetzes (UN) und der Verbindungsaufbausteuerung (GKZ) des Zielnetzes (ZN) gemäß dem ITU-T-Standard H.323 erfolgt.

10. Verfahren nach einem der vorhergehenden Ansprüche,
**dadurch gekennzeichnet,**
**daß** eine Signalisierung zwischen der Verbindungsaufbausteuerung (GKU) des Ursprungsnetzes (UN) und der Verbindungsaufbausteuerung (GKZ) des Zielnetzes (ZN) mittels des SIP-Protokolls (SIP: Session Initiation Protocol) gemäß IETF-Standard erfolgt.

## Claims

1. Method for establishing a connection with a predetermined service quality from one source network (UN) with a source network resource manager (RMU) to a target network (ZN) with a target network resource manager (RMZ), wherein
a) to initialise the connection by a connection control unit (GKU) of the source network (UN), both a connection establishment signal (VAM) is transmitted to a connection control unit (GKZ) of the target network (ZN) and also a reservation request (RA) is transmitted to the source network resource manager (RMU),
b) by the original network resource manager (RMU), a resource reservation is initiated in the source network (UN) according to the reservation request (RA), and the reservation request (RA) is transmitted in the direction of the target network resource manager (RMZ),
c) by the target network resource manager (RMU), a resource reservation is initiated in the target network (UN) according to the received reservation request (RA), and
d) by the transmission of the connection establishment message (VAM), the connection control unit (GKZ) of the target network (ZN) is caused to retrieve reservation information (RB) about the success of the resource reservation from the target network resource manager (RMZ), upon which the reservation information (RB) is transmitted to the connection control unit (GKZ) of the target network (ZN).

2. Method according to claim 1, **characterised in that** the connection establishment is only continued by the connection control unit (GKZ) of the target network (ZN) if a reservation information (RB) displaying a successful resource reservation is received.

3. Method according to any one of the preceding claims, **characterised in that**, by the source network resource manager (RMU), reservation information about the success of the resource reservation in the source network (UN) is transmitted in the direction of the target network resource manager (RMZ).

4. Method according to any one of the claims 1 or 2, **characterised in that** the reservation request (RA) is transmitted in the direction of the target network resource manager (RMZ), by the source network resource manager (RMU) only in the event of successful resource reservation in the source network (UN).

5. Method according to any one of the preceding claims, **characterised in that** the reservation request (RA) from the source network resource manager (RMZ) is transmitted by at least one additional resource manager (RMT) responsible for the connection path between the source network (UN) and the target network (ZN) to the target network resource manager (RMZ).

6. Method according to any one of the preceding claims, **characterised in that** the target network resource manager (RMZ) and / or at least one further resource manager (RMT) responsible for the connection path between the source network (UN) and the target network (ZN) is determined by the source network resource manager (RMU) by means of transmitted address information identifying a connection target (EG2).

7. Method according to any one of the preceding claims, **characterised in that** the connection establishment control unit (GKU) of the source network (UN) is signalled to the connection establishment control unit (GKZ) of the target network (ZN) so that a resource reservation occurs.

8. Method according to any one of the preceding claims, **characterised in that** reservation information (RB) about the success of a resource reservation is transmitted by the target network manager (RMZ) to the source network resource manager (RMU).

9. Method according to any one of the preceding claims, **characterised in that** a signalling between the connection establishment control unit (GKU) of the source network (UN) and the connection establishment control unit (GKZ) of the target network (ZN) takes place according to the ITU T Standard H.323.

10. Method according to any one of the preceding claims, **characterised in that** a signalling between the connection establishment control unit (GKU) of the source network (UN) and the connection establishment control unit (GKZ) of the target network (ZN) takes place by means of the SIP protocol (SIP: session initiation protocol) according to the IETF Standard.

## Revendications

1. Procédé servant à établir une connexion d'une qualité de service prédéfinie entre un réseau d'origine (UN) doté d'un gestionnaire de ressources du réseau d'origine (RMU) et un réseau cible (ZN) doté d'un gestionnaire de ressources du réseau cible (RMZ), dans le cadre duquel
a) aussi bien un message d'établissement de connexion (VAM) destiné à une commande de connexion (GKZ) du réseau cible (ZN) qu'une instruction de réservation (RA) destinée au gestionnaire de ressources du réseau d'origine (RMU) sont transmis aux fins de l'initialisation de la connexion par une commande de connexion (GKU) du réseau d'origine (UN),
b) une réservation de ressources est initiée dans le réseau d'origine (UN) en conformité avec l'instruction de réservation (RA) par le gestionnaire de ressources du réseau d'origine (RMU) et l'instruction de réservation (RA) est transmise au gestionnaire de ressources du réseau cible (RMZ),
c) une réservation de ressources est initiée dans le réseau cible (ZN) en conformité avec l'instruction de réservation (RA) reçue par le gestionnaire de ressources du réseau cible (RMZ), et
d) la commande de connexion (GKZ) du réseau cible (ZN) est amenée par le transfert du message d'établissement de connexion (VAM) à appeler l'information de réservation (RB) relative à la réservation effectuée avec succès de ressources depuis le gestionnaire de ressources du réseau cible (RMZ), ce après quoi l'information de réservation (RB) est transmise à la commande de connexion (GKZ) du réseau cible (ZN).

2. Procédé selon la revendication 1,
**caractérisé en ce**
**que** l'établissement de la connexion par la commande de connexion (GKZ) du réseau cible (ZN) ne se poursuit alors qu'en cas de réception d'une information de réservation (RB) indiquant une réservation effectuée avec succès de ressources.

3. Procédé selon l'une quelconque des revendications précédentes,
**caractérisé en ce**
**qu'**une information de réservation relative à la réservation effectuée avec succès de ressources dans le réseau d'origine (UN) est transmise au gestionnaire de ressources du réseau cible (RMZ) par le gestionnaire de ressources du réseau d'origine (RMU).

4. Procédé selon l'une quelconque des revendications 1 ou 2,
**caractérisé en ce**
**que** l'instruction de réservation (RA) est transmise par le gestionnaire de ressources du réseau d'origine (RMU) uniquement en cas de réservation effectuée avec succès de ressources dans le réseau d'origine (UN) au gestionnaire de ressources du réseau cible (RMZ).

5. Procédé selon l'une quelconque des revendications précédentes,
**caractérisé en ce**
**que** l'instruction de réservation (RA) est transmise par le gestionnaire de ressources du réseau d'origine (RMZ) au gestionnaire de ressources du réseau cible (RMZ) en passant par au moins un autre gestionnaire de ressources (RMT) en charge du chemin de connexion entre le réseau d'origine (UN) et le réseau cible (ZN).

6. Procédé selon l'une quelconque des revendications précédentes,
**caractérisé en ce**
**que** le gestionnaire de ressources du réseau cible (RMZ) et/ou au moins un autre gestionnaire de ressources (RMT) en charge du chemin de connexion entre le réseau d'origine (UN) et le réseau cible (ZN) sont déterminés à l'aide d'une information d'adresse transmise identifiant une destination de connexion (EG2) par le gestionnaire de ressources du réseau d'origine (RMU).

7. Procédé selon l'une quelconque des revendications précédentes,
**caractérisé en ce**
**que** la commande d'établissement de connexion (GKU) du réseau d'origine (UN) permet de signaler à la commande d'établissement de connexion (GKZ) du réseau cible (ZN) qu'une réservation de ressources a lieu.

8. Procédé selon l'une quelconque des revendications précédentes,
**caractérisé en ce**
**que** l'information de réservation (RB) relative à une réservation effectuée avec succès de ressources est transmise par le gestionnaire de ressources du réseau cible (RMZ) au gestionnaire de ressources du réseau d'origine (RMU).

9. Procédé selon l'une quelconque des revendications précédentes,
**caractérisé en ce**
**qu'**une signalisation entre la commande de l'établissement de connexion (GKU) du réseau d'origine (UN) et la commande d'établissement de connexion (GKZ) du réseau cible (ZN) est effectuée selon la norme ITU-T H.323.

10. Procédé selon l'une quelconque des revendications précédentes,
**caractérisé en ce**
**qu'**une signalisation entre la commande d'établissement de connexion (GKU) du réseau d'origine (UN) et la commande d'établissement de connexion (GKZ) du réseau cible (ZN) est effectuée selon la norme IETF au moyen du protocole SIP (SIP : Session Initiation Protocol).
